# FASCICULE DE BREVET EUROPEEN

(11) **EP 0 761 931 B1**
(45) Date de publication et mention de la délivrance du brevet: **03.11.1999**
(21) Numéro de dépôt: 96401847.7
(22) Date de dépôt: 29.08.1996
(51) Int. Cl.: F01D 9/04

(54) **Agencement de turbomachine comprenant une grille d'aubes et un carter intermédiaire**
Turbomaschineanordnung mit Schaufelgitter und Zwischengehäuse
Turbomachine arrangement with blade row and intermediate casing

(30) Priorité: 30.08.1995 FR 9510199
(43) Date de publication de la demande: 12.03.1997
(73) Titulaire: SOCIETE NATIONALE D'ETUDE ET DE CONSTRUCTION DE MOTEURS D'AVIATION Snecma, F-75015 Paris (FR)
(72) Inventeur: Beutin, Bruno, 91100 Corbeil Essonnes (FR); Dejaune, Claude, 77350 Boissise la Bertrand (FR); Charbonnel, Jean-Louis, 77310 Boissise le Roi (FR); Espenel, Alain, 77240 Vert Saint Denis (FR); Collot, André, 91540 Mennecy (FR); Fessou, Philippe, 77000 Melun (FR); Gregoire, Jean-Claude, 91540 Echarcon (FR); Ranvier, Jean-François, 77310 Ponthierry (FR); Martin, Daniel, 77720 Bombon (FR); Thore, Monique, 91560 Crosne (FR); Paitre, Hervé, 77380 Combs la Ville (FR)

(56) Documents cités:
- EP-A- 0 298 898
- GB-A- 1 557 096
- GB-A- 2 004 329
- GB-A- 2 121 115
- GB-A- 2 207 707
- GB-A- 2 226 600
- US-A- 4 461 145

## Description

L'invention a pour sujet un agencement de turbomachine comprenant une grille d'aubes et un carter intermédiaire.

Elle peut trouver emploi pour construire certains moteurs modernes d'avion à grand taux de dilution et plus précisément leur partie qui est située derrière une soufflante d'entrée. Les pièces essentielles à considérer sont ici un carter extérieur, un carter intérieur et un carter intermédiaire concentrique aux deux précédents et divisant leur intervalle en une veine primaire intérieure affectée à la compression puis à la détente des gaz de propulsion et une veine secondaire dans laquelle circule de l'air de dilution.

Il convient de guider ces gaz de dilution par des aubes appelées aérodynamiques et de soutenir les carters en les reliant par des bras radiaux qui prennent généralement l'aspect d'aubes supplémentaires qu'on appelle aubes structurales pour les distinguer des précédentes. Bien que leur aspect soit souvent proche de celui des aubes aérodynamiques, elles doivent être suffisamment résistantes pour assurer ce soutien et pour ne pas se rompre ou flamber si une aube de soufflante se détache et les choque. Les aubes aérodynamique peuvent être beaucoup plus légères mais doivent être en nombre suffisant pour assurer un guidage convenable de l'air.

Dans une conception traditionnelle des moteurs, les aubes structurales forment un groupe distinct des aubes aérodynamiques et sont placées en aval des aubes aérodynamiques dans le sens du flux d'écoulement de l'air de dilution. Cependant, cette conception a été abandonnée dans des moteurs plus récents à cause précisément de l'importance de l'espace axial occupé par les aubes. Dans une conception plus récente, on décida de faire tenir les mêmes rôles à toutes les aubes, c'est-à-dire de les rendre à la fois structurales et aérodynamiques tout en les disposant en grille circulaire unique. Mais il en résulta certains inconvénients qui balançaient les avantages obtenus de simplification de structure et de gain de place : comme toutes les aubes sont exposées aux efforts mécaniques et doivent donc avoir une section suffisante, il faut en pratique les construire creuses et utiliser un métal résistant tel que le titane pour ne pas augmenter exagérément la masse de l'agencement ; et les assemblages des aubes, qui sont faits par mécano-soudage, sont plutôt longs à réaliser. On constate d'ailleurs que la résistance d'aubes creuses au flambement est assez faible. Un exemple analogue est donné dans le document EP-A-0 298 898, où des aubes structurales en nombre égal et en prolongement s'étendent dans les deux veines, mais sans se joindre et former un ensemble unique d'aubes puisque la structure intermédiaire annulaire entre les deux veines est très rigide et assure seule la cohésion de la structure. Cette structure intermédiaire doit probablement être très pesante.

L'invention a pour objet essentiel de permettre d'arriver à une construction compacte de cette région du moteur sans induire les défauts d'augmentation de masse et de solidité médiocre de la solution connue mentionnée ci-dessus. Pour résumer très brièvement la conception à la source de l'invention, on dispose encore toutes les aubes sur une même tranche du moteur, mais en construisant les aubes structurales et aérodynamiques différemment et en les faisant alterner par groupes autour de cette tranche. Les aubes structurales beaucoup moins nombreuses ne nuisent pas à la résistance de l'ensemble : on peut au contraire s'attendre à un progrès à cause de la possibilité d'y concentrer une plus grande partie de la masse totale des aubes et en particulier de les construire avec une section pleine, alors que les aubes aérodynamiques peuvent être creuses, en matériau plus léger et moins coûteux, et qu'il n'est pas utile de les assembler rigidement aux carters par leurs extrémités opposées. Les documents GB-A-1 557 096 et GB-A-2 207 707 décrivent aussi des aubes de guidage et des aubes structurales qui alternent par groupes sur une circonférence d'une veine de passage des gaz, dans des configurations un peu différentes de l'invention puisqu'elles ne comprennent pas deux veines concentriques et un espace intermédiaire de largeur notable délimités par quatre carters concentriques. On doit aussi noter en passant le document GB-A-2 004 329 qui décrit des aubes de guidage de tailles différentes, les plus grandes étant creuses, et qui alternent par groupes sur une circonférence de veine de gaz sans qu'on trouve d'aubes structurales.

Cependant, la distance qu'il faut respecter entre les aubes impose des nombres d'aubes différents pour les deux veines, et on est conduit finalement à -prévoir non seulement des aubes de guidage supplémentaires dans la veine de flux secondaire, mais aussi des aubes structurales plus nombreuses que dans la veine de flux primaire pour éviter qu'elles ne soient trop espacées. La structure de l'invention répond à cette exigence.

On connait par ailleurs, par US-A-4 461 145, un agencement de turbomachine comprenant un premier, un deuxième, un troisième et un quatrième carters circulaires de diamètres décroissants et concentriques, le premier et le deuxième carters délimitant une veine de flux secondaire et le troisième et le quatrième carters une veine de flux primaire, la veine de flux secondaire étant occupée par des aubes fixes de guidage de gaz ne s'étendant pas au-delà du premier ni du deuxième carters et par des parties extérieures d'aubes fixes de support qui s'étendent du premier au quatrième carter. Selon l'invention, les parties extérieures sont prolongées par des bras de support entre les troisième et quatrième carters et par des manchettes intermédiaires entre les deuxième et troisième carters, et les aubes de guidage et de support alternent par groupes sur une circonférence unique et les manchettes intermédiaires sont obliques et ramifiées, entre les bras de support et les parties extérieures des aubes de support.

L'invention va maintenant être décrite plus en détail à l'aide des figures suivantes, annexées à titre illustratif :
- la figure 1 représente un moteur traditionnel,
- et les figures 2 et 3 représentent l'agencement de l'invention.

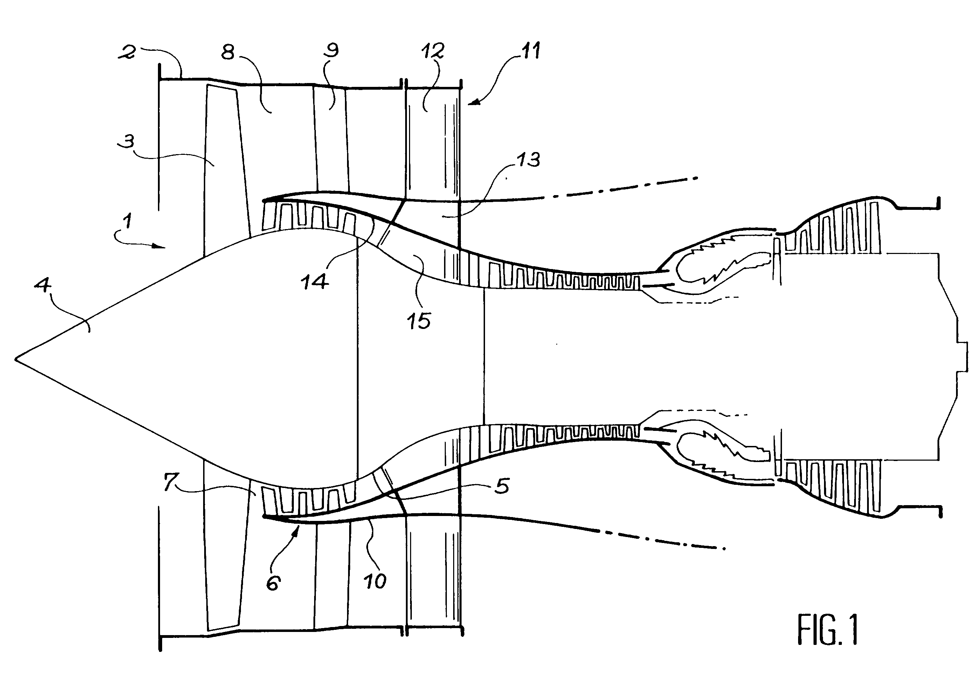

Le moteur de la figure 1, conforme aux notations données auparavant dans ce texte, comprend à l'avant une soufflante 1 munie d'une grille d'aubes de soufflante 3 qui s'étendent presque jusqu'à un carter exterieur encore appelé premier carter 2, depuis un fuselage 4 central qui se prolonge par un carter intérieur 5 stationnaire encore appelé quatrième carter. Un carter intermédiaire 6 apparaît entre celui-ci et le carter extérieur 2 en arrière de la grille d'aubes de soufflante 3 pour séparer une veine primaire 7 d'une veine secondaire 8 du moteur, celle-ci entourant celle-là. Des aubes aérodynamiques 9 affectées au guidage des gaz s'étendent entre le carter extérieur 2 et une peau extérieure 10 du carter intermédiaire 6, ladite peau extérieure 10 constituant un deuxième carter et des aubes structurales 11 destinées à assurer la cohésion de l'assemblage, qui s'étendent derrière les aubes aérodynamiques 9, peuvent être considérées comme formées de trois parties : une partie extérieure 12 comprise entre le carter extérieur 2 et la peau extérieure 10, dans la veine secondaire 8, une partie médiane 13 comprise entre la peau extérieure 10 et une peau intérieure 14 du carter intermédiaire 6, ladite peau intérieure 14 constituant un troisième carter et une partie intérieure 15 s'étendant entre la peau intérieure 14 et le carter intérieur 5, dans la veine primaire 7.

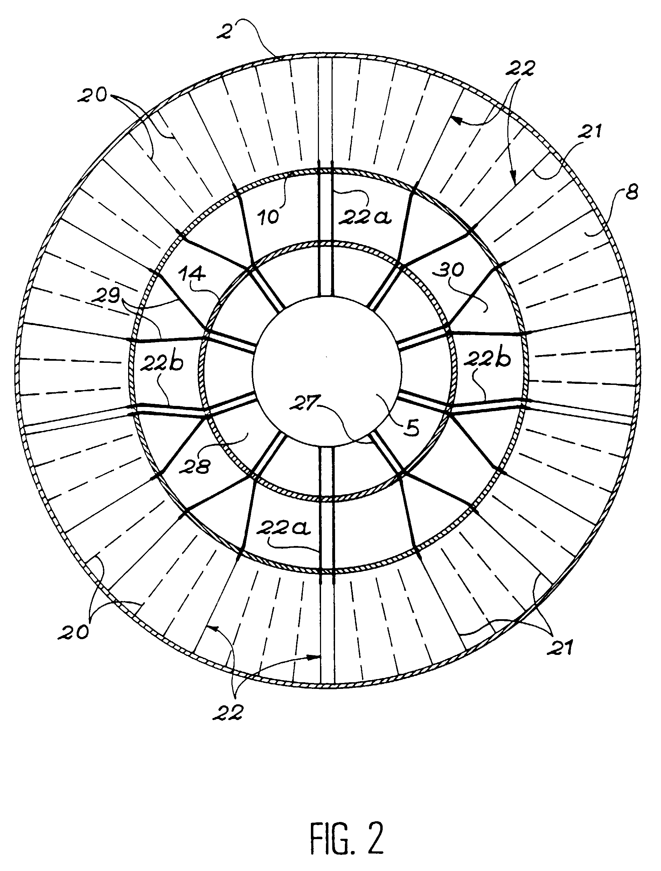

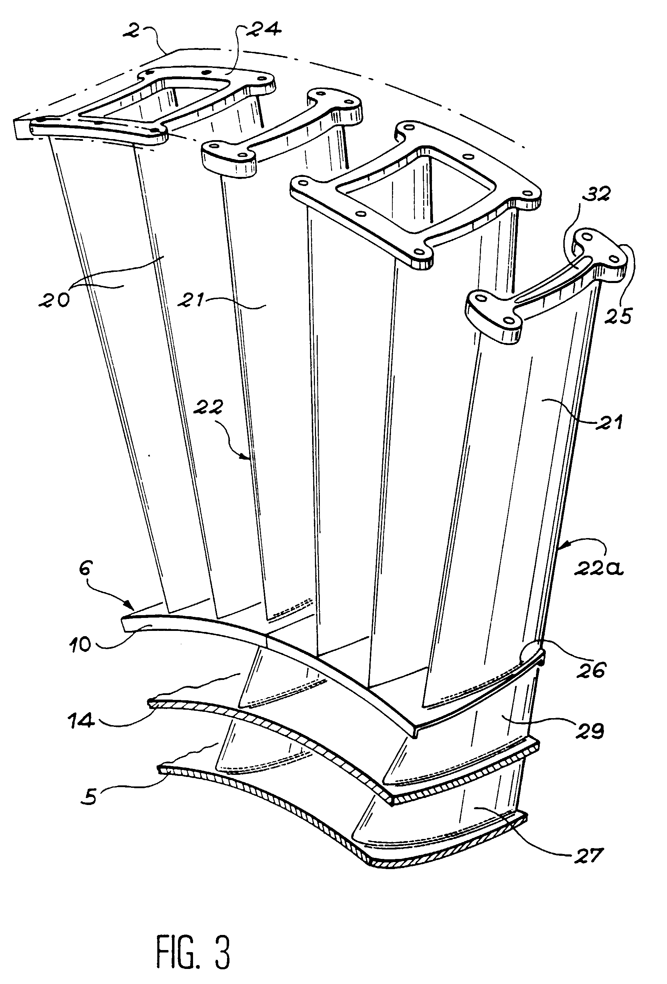

A l'exception des aubes, on adoptera les mêmes références numériques sur les figures 2, 3 pour parler de l'invention.

Les aubes aérodynamiques 20 constituant des aubes de guidage et les parties extérieures 21 des aubes structurales 22 constituant des aubes de support alternent sur une même section de la veine secondaire 8, et plus précisément par groupes, c'est-à-dire qu'entre chaque partie extérieure 21 d'aube structurale 22 on trouve selon le cas une, deux ou trois aubes aérodynamiques 20 pour des raisons particulières de construction des aubes structurales 22 sur lesquelles on reviendra.

On voit à la figure 3 que les groupes d'aubes aérodynamiques 20 sont solidaires de brides 24 respectives qui sont vissées au carter extérieur 2, appelé aussi carter de rétention, et qui n'est qu'esquissé sur cette figure. Le tout peut être construit en un matériau léger tel que l'aluminium, ou encore un matériau composite, ou le titane malgré son coût. Les aubes aérodynamiques 20 ne sont pas reliées au carter intermédiaire 6 mais séparées de lui par un peu de jeu. Leur section est creuse afin de les alléger.

Les parties externes 21 des aubes structurales 22 sont également munies de brides 25 qui sont vissées au carter extérieur 2, et s'étendent jusqu'à la peau extérieure 10 du carter intermédiaire 6. Elles sont avantageusement construites en titane et peuvent être pleines ou creuses comme on le verra.

Il n'est pas forcément utile ni souhaitable que les parties intérieures 27 des aubes structurales 22, encore appelées bras primaires ou bras de support, aient une répartition angulaire identique à celles des parties extérieures 21 ; c'est pour cela que, comme on le représente à la figure 2, on choisit de relier les bras primaires 27 aux parties extérieures respectives par des manchettes 29 qui courent obliquement à travers le volume interne au carter intermédiaire 6, c'est-à-dire l'espace entre les peaux intérieure 14 et extérieure 10. Dans la situation représentée où les parties extérieures 21, dont la distance est à peu près égale à la distance entre les bras primaires 27, sont plus nombreuses que ceux-ci, les aubes structurales 22 se dédoublent pour le plupart, c'est-à-dire qu'à chaque bras primaire 27 correspond en général un couple de manchettes 29 qui se rejoignent sur lui et se prolongent par l'autre bout en autant de parties extérieures 21. Dans la construction représentée, une exception est constituée par deux aubes structurales diamétralement opposées et référencées par 22a ; ces aubes structurales 22a sont placées aux positions angulaires de midi et six heures sur la machine et sont rectilignes et entièrement creuses (le creux est référencé par 32 à la figure 3) afin d'être occupées par des tuyaux rigides ou des arbres de commande qui font communiquer à travers les veines 7 et 8 l'extérieur de la machine avec des équipements usuels situés au centre de la machine, tels que des pompes de lubrifiant, des moteurs électriques, etc. Une disposition analogue d'aubes structurales peut être retenue pour le passage de tuyaux souples, mais il n'est alors pas gênant que les manchettes 29 soient obliques, et c'est ce qu'on a choisi et représenté sur d'autres aubes structurales notées 22b, au nombre de deux et qu'on peut choisir à peu près perpendiculaires aux précédentes. Ces aubes structurales 22b se dédoublent vers l'extérieur ; une des manchettes 29 et la partie extérieure 21 en prolongement sont creuses. Les autres aubes structurales 22 sont avantageusement pleines à leur partie extérieure 21, ce qui leur confère une meilleure résistance aux chocs. Les bras primaires 27 peuvent tous être creux, ainsi que les manchettes 29.

Une soudure 26 est formée pour unir l'extrémité de chacune des parties extérieures 21 à la peau extérieure 10. La liaison peut être obtenue par boulonnage.

On constate que les aubes structurales 22 de l'invention peuvent être trois fois moins nombreuses que dans la solution connue où toutes les aubes sont structurales tout en résistant aux mêmes efforts. En moyenne, deux aubes aérodynamiques 20 alternent donc avec une aube structurale 22, mais des irrégularités de répartition sont possibles, notamment à cause des aubes rectilignes 22a dont la forme est différente.

## Revendications

1. Agencement de turbomachine comprenant un premier, un deuxième, un troisième et un quatrième carters circulaires de diamètres décroissants et concentriques, le premier (2) et le deuxième (10) carters délimitant une veine de flux secondaire (8) et le troisième (14) et le quatrième (5) carters une veine de flux primaire (7), la veine de flux secondaire étant occupée par des aubes fixes de guidage (20) de gaz ne s'étendant pas au-delà du premier ni du deuxième carters et par des parties extérieures (21) d'aubes fixes de support (22) qui s'étendent du premier au quatrième carter, caractérisé en ce que les parties extérieures (21) sont prolongées par des bras de support (27) entre les troisième et quatrième carters et par des manchettes (29) qui sont intermédiaires entre les deuxième et troisième carters, et en ce que les aubes de guidage et de support (20, 21) alternent par groupes sur une circonférence unique et en ce que les manchettes (29) sont obliques et ramifiées entre les bras de support et les parties extérieures (21) des aubes de support.

2. Agencement selon la revendication 1, caractérisé en ce que les aubes de guidage sont construites en une matière différente des aubes de support.

3. Agencement selon l'une quelconque des revendications 1 ou 2, caractérisé en ce que les manchettes (29) sont creuses.

4. Agencement selon la revendication 3, caractérisé en ce que certaines au moins des aubes de support sont creuses et forment des conduits (22a, 22b).

5. Agencement selon la revendication 4, caractérisé en ce que certains au moins des conduits (22a) sont droits.

6. Agencement selon la revendication 5, caractérisé en ce qu'il comprend deux conduits droits (22a) diamétralement opposés, les aubes structurales, à l'exception desdits deux conduits droits, se dédoublant aux parties extérieures (21).

7. Agencement selon l'une quelconque des revendications 1 à 6, caractérisé en ce que les parties extérieures des aubes de support sont pleines pour la plupart, et les aubes de guidage sont creuses.

8. Agencement selon l'une quelconque des revendications 1 à 7, caractérisé en ce que les aubes de guidage (20) sont fixées au premier carter (2) et détachées du deuxième carter (10).

9. Agencement selon la revendication 8, caractérisé en ce que les groupes d'aubes de guidage (20) sont solidarisés par des brides respectives (24) vissées au premier carter (2).

10. Agencement selon la revendication 9, caractérisé en ce que les parties extérieures (21) des aubes de support (22) sont solidarisées par des brides (25) vissées au premier carter (2) et sont soudées (26) au deuxième carter (10).

## Claims

1. Turbomachine arrangement comprising a first, a second, a third and a fourth circular casing with decreasing diameters and which are concentric, the first (2) and the second (10) casings delimiting a bypass-stream tunnel (8) and the third (14) and fourth (5) casings delimiting a primary-stream tunnel (7), the bypass-stream tunnel being occupied by stationary guide vanes (20) for the gas which do not extend beyond the first or second casings and by outer parts (21) of stationary support vanes (22) which extend from the first to the fourth casing, characterized in that the outer parts (21) are extended by support arms (27) between the third and fourth casings and by vane ends (29) which are part way between the second and third casings, and in that the guide and support vanes (20, 21) alternate in groups on a single circumference and in that the vane ends (29) are oblique and branched between the support arms and the outer parts (21) of the support vanes.

2. Arrangement according to Claim 1, characterized in that that the guide vanes are made of a different material from the support vanes.

3. Arrangement according to either one of Claims 1 and 2, characterized in that the vane ends (29) are hollow.

4. Arrangement according to Claim 3, characterized in that at least some of the support vanes are hollow and form ducts (22a, 22b).

5. Arrangement according to Claim 4, characterized in that at least some of the ducts (22a) are straight.

6. Arrangement according to Claim 5, characterized in that it comprises two diametrically opposed straight ducts (22a), the structural vanes, with the exception of the said two straight ducts, splitting in two at the outer parts (21).

7. Arrangement according to any one of Claims 1 to 6, characterized in that the outer parts of the support vanes are mainly solid, and the guide vanes are hollow.

8. Arrangement according to any one of Clams 1 to 7, characterized in that the guide vanes (20) are fixed to the first casing (2) and detached from the second casing (10).

9. Arrangement according to Claim 8, characterized in that the groups of guide vanes (20) are secured by respective flanges (24) screwed to the first casing (2).

10. Arrangement according to Claim 9, characterized in that the outer parts (21) of the support vanes (22) are secured by flanges (25) screwed to the first casing (2) and are welded (26) to the second casing (10).

## Patentansprüche

1. Turbomaschinenanordnung mit einem ersten, einem zweiten, einem dritten und einem vierten kreisförmigen Gehäuse mit kleiner werdenden, konzentrischen Durchmessern, wobei das erste und das zweite Gehäuse (2, 10) eine Mantelstrombahn (8) umgrenzen und das dritte und das vierte Gehäuse (14, 5) eine Primärstrombahn (7) umgrenzen, wobei die Mantelstrombahn mit feststehenden Gasleitschaufeln (20), die sich nicht über das erste und das zweite Gehäuse hinaus erstrecken, sowie mit Außenteilen (21) von feststehenden Stützschaufeln (22), die sich vom ersten bis zum vierten Gehäuse erstrecken, besetzt ist,
**dadurch gekennzeichnet, daß** die Außenteile (21) zwischen dem dritten und dem vierten Gehäuse durch Stützarme (27) und zwischen dem zweiten und dem dritten Gehäuse durch dazwischen angeordnete Manschetten (29) verlängert werden, und daß die Leit- und Stützschaufeln (20, 21) abwechselnd gruppenweise an einer einzigen Umfangslinie angeordnet sind, und daß die Manschetten (29) schräg und zwischen den Stützschaufeln verzweigt angeordnet sind.

2. Turbomaschinenanordnung nach Anspruch 1, **dadurch gekennzeichnet, daß** die Leitschaufeln aus einem anderen Material hergestellt sind als die Stützschaufeln.

3. . Turbomaschinenanordnung nach einem der Ansprüche 1 oder 2, **dadurch gekennzeichnet, daß** die Manschetten (29) hohl sind.

4. Turbomaschinenanordnung nach Anspruch 3, **dadurch gekennzeichnet, daß** zumindest manche Stützschaufeln hohl sind und Leitungen (22a, 22b) bilden.

5. Turbomaschinenanordnung nach Anspruch 4, **dadurch gekennzeichnet, daß** zumindest manche Leitungen (22a) gerade sind.

6. Turbomaschinenanordnung nach Anspruch 5, **dadurch gekennzeichnet, daß** sie zwei gerade Leitungen (22a) aufweist, die einander diametral gegenüberliegen, wobei sich die Strukturschaufeln, mit Ausnahme der genannten zwei geraden Leitungen, an den Außenteilen (21) verdoppeln.

7. Turbomaschinenanordnung nach einem der Ansprüche 1 bis 6, **dadurch gekennzeichnet, daß** die Außenteile der Stützschaufeln zum größten Teil massiv sind und die Leitschaufeln hohl sind.

8. Turbomaschinenanordnung nach einem der Ansprüche 1 bis 7, **dadurch gekennzeichnet, daß** die Leitschaufeln (20) am ersten Gehäuse (2) befestigt sind und vom zweiten Gehäuse (10) getrennt sind.

9. Turbomaschinenanordnung nach Anspruch 8, **dadurch gekennzeichnet, daß** die Gruppen von Leitschaufeln (20) durch jeweilige Flansche (24) fest verbunden sind, die am ersten Gehäuse (2) angeschraubt sind.

10. Turbomaschinenanordnung nach Anspruch 9, **dadurch gekennzeichnet, daß** die Außenteile (21) der Stützschaufeln (22) durch Flansche (25) fest verbunden sind, die am ersten Gehäuse (2) angeschraubt sind, und am zweiten Gehäuse (10) angeschweißt (26) sind.
